# EUROPEAN PATENT APPLICATION

(11) **EP 0 825 397 A1**
(43) Date of publication of application: **25.02.1998**
(21) Application number: 97905403.8
(22) Date of filing: 26.02.1997
(51) Int. Cl.: F25B 15/00

(54) **ABSORPTION REFRIGERATOR**

(30) Priority: 26.02.1996 JP 38409/96
(71) Applicant: The Chugoku Electric Power Co., Inc., Hiroshima-ken 730-91 (JP); MITSUI ENGINEERING & SHIPBUILDING CO., LTD, Tokyo 104 (JP)
(72) Inventor: TAKAKI, Tsuneo, The Chugoku Electric Power Co. Inc, Hiroshima-shi, Hiroschima-ken 730-91 (JP); KANETSUKI Mitsuaki, The Chugoku Elc.Power Co. Inc., Hiroshima-shi, Hiroschima 730-91 (JP); ENDOU, Hajime, Mitsui Eng. & Shipbuilding Co. Ltd., Tokyo 104 104 (JP); NAGASHIMA Yoshinori, Mitsui Eng. & Shipbg. Co. Ltd, Tamano-shi, Okayama-ken 706 (JP)
(74) Representative: Sturt, Clifford Mark
(86) International application number: JP9700552
(87) International publication number: WO9731229

(57) **Abstract**

An absorption refrigerator comprising as main constituent elements an evaporator, an absorber, a regenerator, a solution heat exchanger and a condenser, wherein the condensing temperature is set higher than the absorbing temperature, and wherein a dilute solution that is fed out from the absorber is pre-heated by refrigerant vapor generated in the regenerator before it is supplied to the solution heat exchanger.

## Description

### Technical Field

This invention relates to an absorption refrigerating machine. More particularly, the present invention relates to an absorption refrigerating machine which uses water or ammonia as a refrigerant and lithium bromide or water as an absorbing agent, and comprises an evaporator, an absorber, a heat exchanger, a regenerator and a condenser as principal constituent elements thereof.

### Background Art

Generally, because temperature levels are different between an absorption process and a regeneration process in absorption refrigerating machines, heat exchange is executed in a heat exchanger between a high concentration refrigerant absorbing solution (hereinafter referred to as a "concentrated solution") and a low concentration refrigerant absorbing solution (hereinafter referred to as a "dilute solution") having a lower concentration than the concentrated solution, and heat required for pre-heating the dilute solution is recovered from the concentrated solution.

However, the dilute solution absorbs the water content in the absorber whereas the concentrated solution regenerated in the regenerator emits the water content when regenerated. Therefore, the flow rate of the concentrated solution as the heat source is smaller than that of the dilute solution. The concentrated solution has a lower specific heat than the dilute solution. For these reasons, the temperature rise of the dilute solution is smaller than the temperature drop of the concentrated solution.

Accordingly, heat recovery of the dilute solution can be made only up to a temperature lower than a regeneration start temperature. This means that only a part of pre-heating of the dilute solution can be made in the heat exchanger, and the heat of the pre-heating portion required for raising the temperature from the outlet temperature of the heat exchanger to the regeneration start temperature in the regenerator and the heat for regeneration (concentration) are necessary. In other words, a greater quantity of heat source water is consumed and a performance coefficient of the absorption refrigerating machine drops as much.

### Disclosure of the Invention

The present invention is completed so as to improve the problems of the prior art described above, and is directed to providing an absorption refrigerating machine capable of reducing the heating quantity in the regenerator and improving the performance coefficient.

In an absorption refrigerating machine including an evaporator, an absorber, a regenerator, a solution heat exchanger for subjecting a concentrated solution regenerated in the regenerator and a dilute solution formed in the absorber to heat exchange, and a condenser as principal constituent elements thereof, the absorption refrigerating machine according to the present invention for accomplishing the object described above is characterized in that a condensation temperature is set to a higher level than an absorption temperature, and the dilute solution sent from the absorber is pre-heated by a refrigerant vapor generated in the regenerator before it is supplied to the solution heat exchanger.

According to the present invention, the regeneration and condensation pressures are set to higher levels than regeneration and condensation pressures used in the prior art so as to set the condensation temperature to a higher level than an absorption temperature, and to set the condensation temperature of a refrigerant to a higher level than an absorber outlet temperature of the dilute solution. In this way, the condensation calory of the refrigerant can be used for pre-heating the dilute solution. In this case, the regeneration pressure coincides quite naturally with the condensation pressure, and the regeneration temperature becomes higher than that in the prior art.

The condensation pressure of the refrigerant mainly depends on the cooling temperature, and setting of the condensation temperature to an optimum temperature for pre-heating the dilute solution by raising the condensation pressure of the refrigerant can be accomplished by merely using the dilute solution for condensation of the refrigerant in the condenser. In other words, the refrigerant vapor is cooled by the dilute solution sent from the absorber in place of cooling water of the condenser that has been used conventionally. In this way, the condensation latent heat can be utilized for pre-heating the dilute solution.

Incidentally, the elevation of the regeneration temperature essentially requires the elevation of the heat source temperature but there is no specific problem because the heat source temperature is high in the case of gas firing, or the like. Kerosine firing, steam firing, high temperature water firing, etc, can be employed beside gas firing.

In addition to the concentrated solution used in the past as the heat source for pre-heating the dilute solution, the present invention pre-heats the dilute solution by utilizing the condensation solution of the refrigerant in the condenser. In consequence, the pre-heating temperature of the dilute solution rises, the heating quantity in the regenerator decreases and the performance coefficient of the absorption refrigerating machine increases.

### Brief Description of Drawings

Fig. 1 is a schematic view of an absorption refrigerating machine according to one embodiment of the present invention;
Fig. 2 is a cycle diagram of the absorption refrigerating machine shown in Fig. 1;
Fig. 3 is a schematic view of a single utility absorption refrigerating machine according to the prior art; and
Fig. 4 is a cycle diagram of the absorption refrigerating machine shown in Fig. 3.

### Best Mode for Carrying Out the Invention

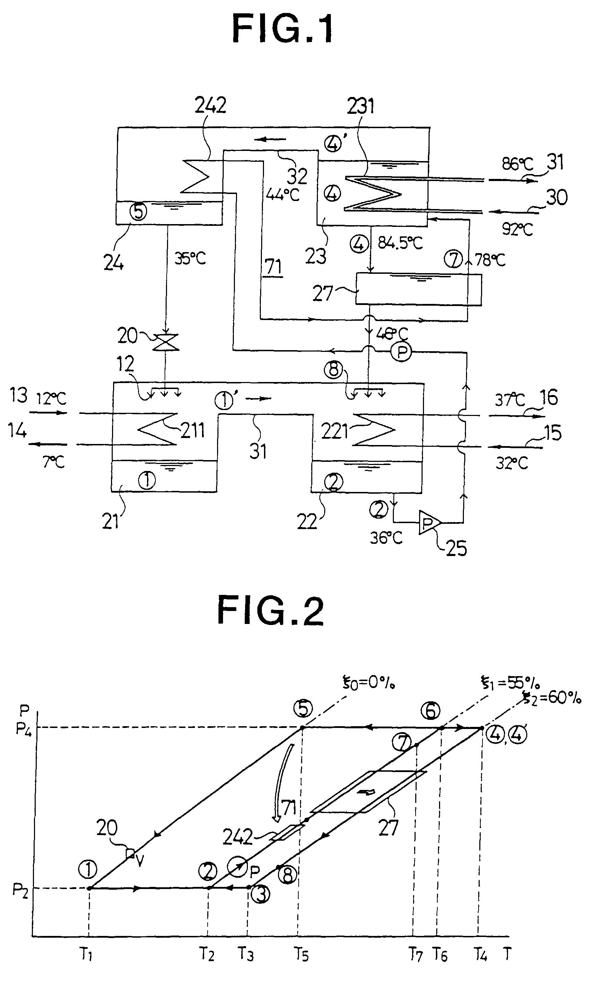

Fig. 1 is a schematic view when the present invention is applied to a single utility absorption refrigerating machine using a LiBr solution, and Fig. 2 is a cycle diagram (Dühring diagram) for Fig. 1. Symbol ξ represents a concentration of an aqueous lithium bromide solution as a refrigerant absorbing solution. For example, symbol ξ₀ represents the concentration of 0% of the aqueous lithium bromide solution, that is, a saturation state of pure water. Symbol ξ₁ represents the concentration of 55% of the aqueous lithium bromide solution (hereinafter referred to as a "dilute solution") and ξ₂ represents the concentration of 60% of the aqueous lithium bromide solution (hereinafter referred to as a "concentrated solution").

As shown in Fig. 1, water 12 as a refrigerant is subjected to heat exchange at a heat transfer portion 211 of an evaporator 21 with cold water 13 supplied to the evaporator 21 and evaporates. The resulting vapor ①' is supplied to an absorber 22 through a passage 31. As the temperature of cold water 13 drops as a result of heat exchange, it is sent out as cold water 14 and is utilized.

In the absorber 22, the concentrated solution ⑧ flows on the surface of the heat transfer portion 221. This concentration solution ⑧ absorbs the vapor ①' generated by the evaporator 21, so that the concentration of the solution lowers and the solution changes to the dilute solution ②. At this time, cooling water 15 supplied to the heat transfer portion 221 of the absorber 22 controls the temperature of the dilute solution ② to a predetermined temperature (saturation temperature T₂) or below. The temperature of cooling water 15 rises due to heat exchange and is fed back to a cooling tower (not shown), etc, as cooling water 16.

The dilute solution ② staying at the bottom portion of the absorber 22 is pumped out by a solution pump 25, and while it passes through a heat transfer portion 242 of a condenser 24 and through a solution heat exchanger 27, it is pre-heated and is then sent to a regenerator 23. This dilute solution ② is heated and boiled by heat source water 30 flowing inside a pipe of the heat transfer portion 231 of the regenerator 23 and the water content (refrigerant solution) in the solution evaporates. Heat source water 30 changes to hot water 31 while it passes through the heat transfer pipe 231 of the regenerator 23 and is sent back to a water heater (not shown), or the like.

The vapor ④' generated by the regenerator 23 passes through the passage 32, flows into the condenser 24, is subjected to heat exchange with the dilute solution ② flowing inside the pipe of the heat transfer portion 242 of the condenser 24, is condensed, and returns as liquid water ⑤ to the evaporator 21 through an expansion valve 20.

On the other hand, the concentrated solution ④ inside the regenerator 23 is sent to the solution heat exchanger 27, is subjected to heat exchange with the dilute solution ② and returns as a low temperature concentrated solution ⑧ to the absorber 22.

As described above, the present invention sets regeneration and condensation pressures P₄ to a high level so that the condensation temperature becomes higher than the absorption temperature and the condensation temperature T₅ of the refrigerant becomes higher than the outlet temperature T₂ of the dilute solution at the outlet of the absorber. Therefore, the condensation heat of the refrigerant can be used for pre-heating the dilute solution.

In other words, the dilute solution ② leaving the absorber 22 is pre-heated in two stages, i.e. by the heat transfer portion 242 of the condenser 24 and by the solution heat exchanger 27. In consequence, the liquid temperature T₇ at the outlet ⑦ of the solution heat exchanger 27 rises and approaches the regeneration initial temperature T₆ of the dilute solution ② as shown in Fig.2, and the heat consumption quantity of heat source water 30 in the absorber 22 can be reduced.

By the way, the single utility absorption refrigerating machine according to the prior art is different from the single utility absorption refrigerating machine according to the present invention in that the dilute solution ② inside the absorber 22 is directly sent to the regenerator 23 through the solution heat exchanger 27 and that cooling water 17 is supplied from outside to the heat transfer portion 241 provided to the condenser 24. Since other constructions are not different from those of the single utility absorption refrigerating machine of the present invention, the explanation in detail will be omitted. Incidentally, like reference numerals will be used to identify like constituent members as in the single utility absorption refrigerating machine according to the present invention.

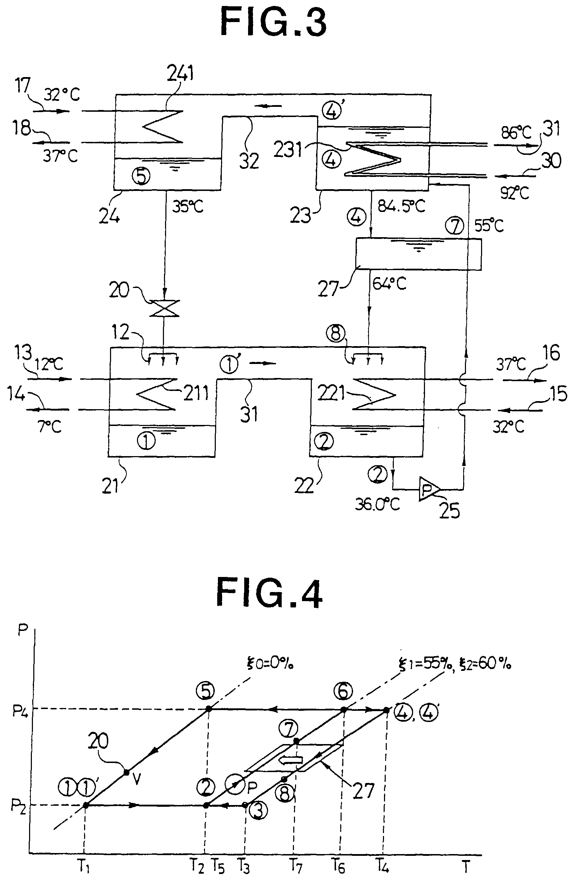

In the single utility absorption refrigerating machine according to the prior art, the dilute solution ② is subjected to heat exchange with the concentrated solution ④ in the solution heat exchanger 27 and is heated from 36°C to 55°C as shown in Fig. 3, but pre-heating to the regeneration start temperature of 81°C (temperature increment of 26°C) must be made in the regenerator 23, too.

In the present invention, the dilute solution ② is guided to the heat transfer portion 242 of the condenser 24 so that first stage pre-heating is made by the latent heat of the regenerated vapor generated in the regenerator 23 as shown in Fig. 1. Therefore, the temperature of the dilute solution ② sent into the solution heat exchanger 27 rises from the initial temperature of 36°C to 44°C.

Therefore, the temperature of the dilute solution ② rises to 78°C at the outlet ⑦ of the solution heat exchanger 27 and in comparison with the single utility absorption refrigerating machine according to the prior art, it can be understood that this temperature is extremely close to the regeneration start temperature of 81°C. In other words, the calory required for pre-heating (to the temperature increment of 3°C) of the dilute solution ② in the regenerator 23 can be drastically reduced.

As a result, the heat input of the regenerator 23 can reduce the flow rate of heat source water by about 28% in comparison with the prior art, though it is not shown in the drawing. Incidentally, the performance coefficient of the single utility absorption refrigerating machine according to the prior art shown in Fig. 3 is 0.65, whereas the performance coefficient of the single utility refrigerating machine of the present invention shown in Fig. 1 is 0.83.

In Fig. 1, reference numeral ① denotes liquid water staying at the bottom of the evaporator 21, and reference numeral 71 denotes the outlet of the heat transfer portion 242 of the condenser 24. In Fig. 3, reference numeral 18 denotes cooling water sent out from the heat transfer portion 241 of the condenser 24.

Besides the single utility type shown in the drawings, the absorption refrigerating machines using water as the refrigerant and lithium bromide as the absorbing agent include a double utility type which guides the vapor generated in the regenerator into a second regenerator. Since the double utility type (not shown in the drawing) guides the vapor generated in the high pressure regenerator into the low pressure regenerator and uses it as the heat source of the low pressure regenerator, the heat input in the high pressure regenerator can be utilized twice more effectively than in the single utility type, and the performance coefficient can be doubled.

However, the calory for pre-heating the dilute solution in the heat exchanger is insufficient in the same way as in the single utility type, the proportion of the heat input corresponding to the heat for pre-heating the dilute solution in the high pressure regenerator cannot be neglected.

Therefore, if the dilute solution of the first stage is pre-heated by the condensation heat of the vapor generated in the low pressure regenerator and is then sent to the low pressure solution heat exchanger, the system can be applied basically and substantially in the same way as in the present invention. Therefore, the detailed explanation will be omitted.

The explanation given above deals with the case where water is used as the refrigerant and lithium bromide, as the absorbing agent. However, the absorption refrigerating machines using water as the refrigerant can use LiI, LiCl, LiNO₃, KBr, NaBr, CaCl₂, ZnCl₂, ZnBr₂ and their mixtures as the absorbing agent besides LiBr. The single component of LiBr has gained a wide application due to its high performance such as low corrosiveness and high crystallization concentration.

In those absorption refrigerating machines which use ammonia as the refrigerant and water as the absorbing agent, constituent elements such as a rectifying column, a dephlegmeter, and the like, add to the system. In conjunction with the heat cycle (on the Dühring's diagram), however, such absorption refrigerating machines are the same as the absorption refrigerating machine using the LiBr solution in that pre-heating in the heat exchanger of the solution sent to the regenerator is not sufficient, the heating quantity in the regenerator increases and the drop of the performance coefficient occurs.

Therefore, the temperature and the pressure required for regeneration and condensation are set so that the condensation temperature of the ammonia vapor sent from the regenerator becomes higher than the absorption temperature, and it becomes possible to reduce the heating quantity in the regenerator and to improve the performance coefficient by pre-heating the solution by the heat of condensation. This point is entirely the same as in the absorption refrigerating machines using water and lithium bromide.

The refrigerating machines are used for the purpose of air cooling (or cooling), but they can be used for air heating (or heating) as a heat pump by reversing the heat source (cooling water) and the heat output (cold water) by using the input heat of the evaporator as the heat source and the cooling heat of the absorber as the heat output on the basis of the same principle.

Therefore, since the present invention provides the technology effective for both the absorption refrigerating machine and the absorption heat pump, the scope of the present invention covers also the heat pump.

## Claims

1. An absorption refrigerating machine including an evaporator, an absorber, a regenerator, a solution heat exchanger for subjecting a concentrated solution regenerated in said regenerator and a dilute solution generated in said absorber to heat exchange, and a condenser as principle constituent elements thereof, characterized in that a condensation temperature is set to a level higher than an absorption temperature, and the dilute solution sent from said absorber is pre-heated by a refrigerant vapor generated in said regenerator before the dilute solution is supplied to said solution heat exchanger.

2. An absorption refrigerating machine according to claim 1, further comprising a heat transfer portion provided to said condenser, for condensing the refrigerant vapor sent from said regenerator to said condenser by the dilute solution sent from said absorber.
